# EUROPEAN PATENT SPECIFICATION

(11) **EP 0 282 290 B1**
(45) Date of publication and mention of the grant of the patent: **11.05.1994**
(21) Application number: 88302059.6
(22) Date of filing: 10.03.1988
(51) Int. Cl.: H04N 9/29

(54) **Resonant degaussing apparatus**
Resonanzentmagnetisierungseinrichtung
Dispositif de démagnétisation résonnant

(30) Priority: 13.03.1987 GB 8705956; 30.07.1987 US 79322
(43) Date of publication of application: 14.09.1988
(73) Proprietor: RCA Thomson Licensing Corporation, Princeton, NJ 08540 (US)
(72) Inventor: Hemme, Jürgen Friedrich, CH-8706 Meilen (CH)
(74) Representative: Pratt, Richard Wilson

(56) References cited:
- EP-A- 0 069 840
- US-A- 4 489 253
- US-A- 4 599 673
- PATENT ABSTRACTS OF JAPAN, vol. 9, no. 43 (E-298)[1766], 22nd February 1985;& JP-A-59 182 692 (MATSUSHITA) 17-10-1984

## Description

This invention relates to degaussing circuits for video display equipment.

Color cathode ray tubes require periodic degaussing or demagnetization to avoid the magnetizing effects of the earth's magnetic field or of electromagnetic fields produced by nearby electrical devices, such as motors or appliances. These fields may magnetize metallic portions of the cathode ray tube, such as the shadow mask, causing a degradation of the color purity of the tube. Video display apparatus, such as television receivers and computer or video display monitors, usually incorporate a degaussing circuit which is operative when the apparatus is energized to produce an alternating current field that decays toward zero in order to demagnetize the metallic components in the vicinity of the tube and of the tube itself.

A common type of degaussing circuit that includes a degaussing coil is powered from the AC line supply, which in the United States has a frequency of 60 Hz. This type of degaussing circuit ordinarily utilizes a positive temperature coefficient resistor, or thermistor, or other temperature sensitive component, which increases in resistance as it heats due to degaussing current flow. This causes the alternating degaussing current to decay in a manner that provides demagnetization of the cathode ray tube metallic components.

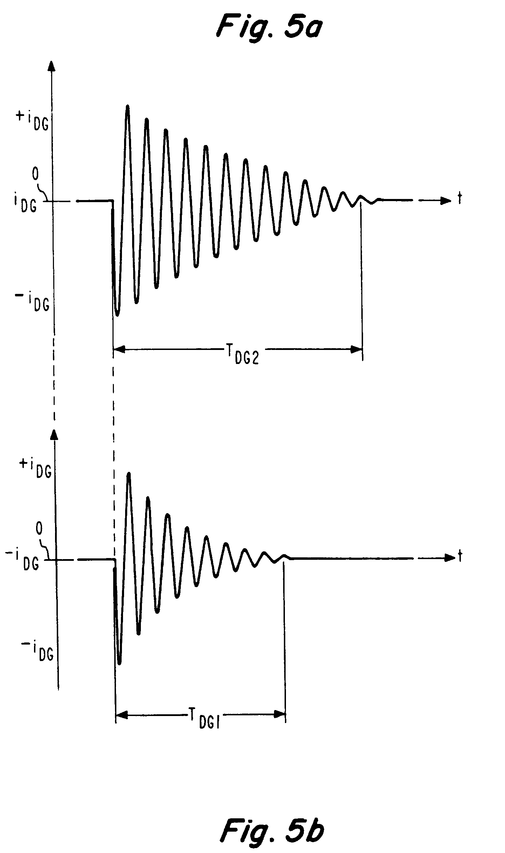

Another type of degaussing circuit utilizes a resonant or ring-down degaussing circuit as known from US-A-4599673 for example. The resonant degaussing circuit operates by causing a capacitor connected in parallel with the degaussing coil to resonate with the coil in an oscillating manner. The finite Q of the resonant circuit causes the degaussing current to decay in the manner shown in FIGURE 5b, for example, to effect demagnetization of the display apparatus metallic parts.

US-A-4489253 also discloses a resonant degaussing circuit for a color television receiver. The receiver includes a continuously energised switched mode power supply. The supply feeds a voltage doubler, comprising a capacitor and a diode. The voltage doubler is coupled to a resonant degaussing circuit comprising a resonating capacitor, a degaussing coil and a triac. The voltage doubler charges the resonating capacitor whilst the receiver is off. The triac couples the resonating capacitor in parallel with the degaussing coil when the receiver is turned on to effect resonant degaussing.

The resonant frequency of a resonant degaussing circuit may be of the order of 2 kHz, so that degaussing is completed in less than 5 milliseconds. Because of the finite Q of the resonant circuit, the duration of a degaussing interval such as interval T_{DG1} of FIGURE 5b is limited by the parameters of the resonant circuit. In some degaussing circuit applications, it may be desirable to lengthen the duration of the degaussing interval beyond that obtained from the conventional degaussing resonant circuit in a way that does not have an adverse impact on the cost of, for example, the degaussing coil.

In accordance with one aspect of the present invention, there is provided a resonant degaussing circuit of a television display apparatus, comprising: a degaussing coil (L_{DG}); a first switch (SCR1); a first capacitance (C1) that is precharged prior to a degaussing interval, said first capacitance (C1) being coupled to said degaussing coil (L_{DG}) by said first switch (SCR1) to form with said degaussing coil a resonant circuit that generates a plurality of cycles of a degaussing current (i_{DG}) in said degaussing coil during said degaussing interval; a second capacitance (C2) that is precharged prior to generation of said degaussing current (i_{DG}); characterized by a second switch (Q4) coupling said second capacitance (C2) to said first capacitance (C1) when the value of said degaussing current (i_{DG}) passes through zero to couple charge from said second capacitance (C2) to said resonant circuit during said degaussing interval.

In accordance with another aspect of the invention, there is provided a resonant degaussing circuit of a television display apparatus, comprising: a degaussing coil (L_{DG}); a switch (SCR1); a capacitance (C1) that is precharged prior to a degaussing interval, said capacitance (C1) being coupled to said degaussing coil (L_{DG}) by said switch (SCR1) to form with said degaussing coil a resonant circuit that generates, in accordance with the charge that is stored in said capacitance (C1), a plurality of cycles of a degaussing current in said degaussing coil (L_{DG}) during said degaussing interval; characterized by means (TF,C2,Q4) responsive to said degaussing current for generating a pulse of current that is coupled to said capacitance (C1) when the value of said degaussing current passes through zero, to augment said charge that is stored in said capacitance (C1).

The switching operation of the second switch may be synchronized to the degaussing current using a current sensing transformer in a current path of the degaussing current.

In the accompanying drawings:
FIGURE 1 illustrates a resonant degaussing circuit that includes a charge transfer arrangement, embodying some aspects of the invention, that utilizes a current sensing transformer;
FIGURE 2 illustrates an example of waveforms of the current and voltage in a degaussing coil of the circuit of FIGURE 1;
FIGURE 3 illustrates a waveform of pulses generated by the current sensing transformer of FIGURE 1;
FIGURE 4 illustrates the construction of the current sensing transformer of FIGURE 1;
FIGURE 5a illustrates the waveform of the degaussing current of the circuit of FIGURE 1 when the charge transfer arrangement is included; and
FIGURE 5b illustrates, for comparison purposes, the waveform of the degaussing current of the circuit of FIGURE 1 when the charge transfer arrangement is disconnected.

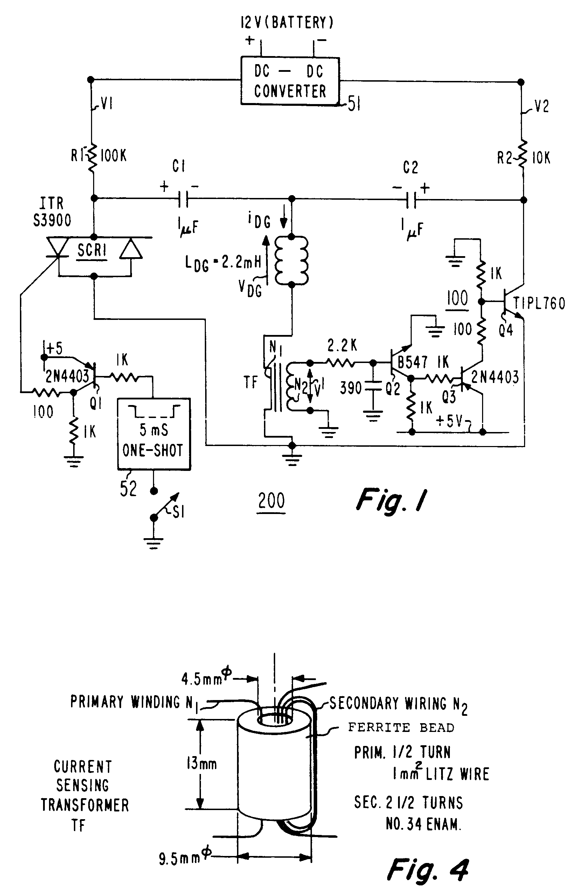

FIGURE 1 illustrates a resonant degaussing circuit 200 that includes a charge pump or transfer arrangement 100, embodying some aspects of the invention. Degaussing circuit 200 includes a capacitor C1 that is precharged prior to a degaussing interval, in a polarity shown, from a DC-to-DC converter 51 that generates DC voltages V1 and V2. Voltage V1 is coupled to capacitor C1 through a large resistor R1 and through a DC current path that is formed in a degaussing coil L_{DG}.

A switch SCR1, that includes a combination of thyristor and a diode forming an integrated thyristor rectifier (ITR), couples, in a well known manner, capacitor C1 across degaussing coil L_{DG}, at a beginning time of a degaussing interval. An example of the way a switch such as switch SCR1 operates is described in U.S. Patent No. 4,489,253 entitled AUTOMATIC DEGAUSSING CIRCUIT WITH SWITCH MODE POWER SUPPLY, in the name of T.J. Godawski.

Switch SCR1 of FIGURE 1 is turned on for a duration of, for example, 5 milliseconds by a pulse that is generated by a one-shot flip-flop 52, which pulse is coupled through a transistor Q1 to the gate of switch SCR1. The value of resistor R1 is selected so that the maximum current that can flow through resistor R1 is lower than the holding current of switch SCR1. Therefore, after the end of the degaussing interval, switch SCR1 becomes nonconductive, which allows capacitor C1 to recharge via resistor R1 to provide the initial conditions for the next degaussing interval. The pulse that turns on switch SCR1 may be generated, in a well known manner, by manually activating a switch such as a switch S1 of FIGURE 1 and/or, automatically, each time power is applied to the degaussing circuit.

Charge transfer arrangement 100 of FIGURE 1 includes a capacitor C2 that is precharged prior to, for example, degaussing interval T_{DG2} of FIGURE 5a, in a polarity shown in FIGURE 1, from voltage V2. Voltage V2 may be, for example, equal to voltage V1. Voltage V2 is coupled to capacitor C2 through a resistor R2 and through the current path that is formed by degaussing coil L_{DG}.

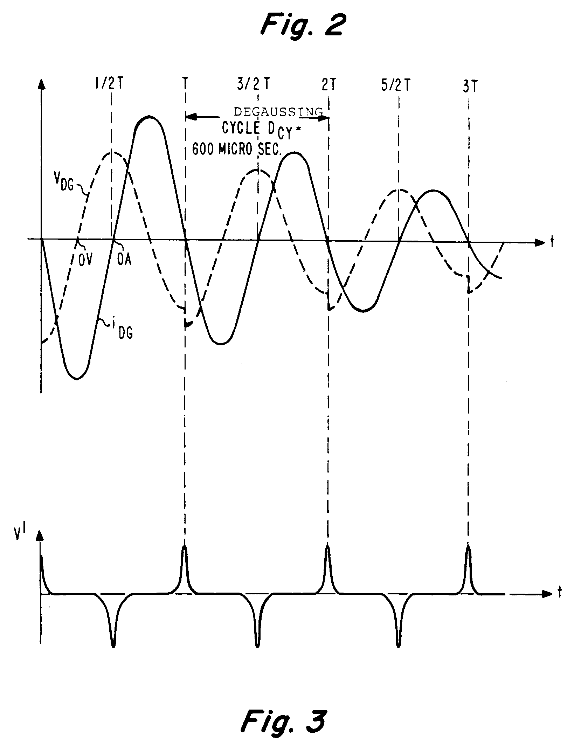

In carrying out an aspect of the invention, a current transformer TF having a primary winding N₁, that is formed by, for example, a single winding loop around a ferrite core that is constructed in a manner shown in FIGURE 4, is coupled in the current path of degaussing current i_{DG} of FIGURE 1. Transformer TF is saturable at a low value of current, so as to act as a zero crossing detector. Transformer TF generates a pulse Vʹ in a secondary winding N₂ of FIGURE 3 in a polarity dependent on the direction of current flow in winding N₁, as shown in FIGURE 3. Pulse Vʹ is generated each time, in a given cycle, when current i_{DG} of FIGURE 2 changes from a positive to a negative polarity. Thus, pulse Vʹ of FIGURE 3 is generated when voltage V_{DG} across coil L_{DG} of FIGURE 1 is at its maximum value and current i_{DG} at a minimum, such as at times 1/2T, T, 3/2T, 2T, 5/2T, 3T etc. of FIGURES 2 and 3.

Pulse Vʹ is coupled through a pulse shaping and drive arrangement that includes transistors Q2 and Q3 to the base electrode of a transistor switch Q4 to turn on transistor switch Q4 during, for example, a short duration of each cycle D_{CY} of alternating degaussing current of FIGURE 2 when voltage V_{DG} is at the maximum negative level, since transistor Q2 conducts only in response to the positive pulses of pulse Vʹ. Capacitor C2 of FIGURE 1 is precharged prior to, for example, the initiation of the degaussing interval. Capacitor C2 may be precharged, provided the value of resistor R2 is sufficiently small, even during each cycle D_{CY} of alternating degaussing current during the interval of FIGURE 2 that precedes pulse Vʹ.

When a positive pulse Vʹ occurs, transistor switch Q4 couples capacitor C2 in parallel with capacitor C1. Consequently, capacitor C2 transfers a charge to capacitor C1 that augments the charge already stored in capacitor C1. Therefore, advantageously, by periodically augmenting the charge in capacitor C1 from that stored in capacitor C2, the corresponding duration of degaussing interval T_{DG2} of FIGURE 5a, that can be obtained for given circuit parameters, is longer than if arrangement 100 was not used.

Degaussing interval T_{DG1} as shown in FIGURE 5b depicts a situation that occurs when transistor switch Q4 of FIGURE 1 is removed from the circuit, for explanation purposes. It can be seen that interval T_{DG1} of FIGURE 5b is shorter than degaussing interval T_{DG2} of FIGURE 5a. Interval T_{DG2} occurs when transistor switch Q4 is included in arrangement 100 of FIGURE 1, embodying the invention, that renders arrangement 100 fully operative.

It should be understood that the charge transfer from capacitor C2 to capacitor C1 may be designed to occur, during, for example, a relatively short duration, every half period T of FIGURE 2 of current i_{DG} cycle that occurs when degaussing current i_{DG} is zero and when the rate of change of voltage V_{DG} is minimal. Because the coupling of capacitor C2 to the resonant circuit occurs when current i_{DG} is small, the disturbance to degaussing current i_{DG} of FIGURE 1 is, advantageously, small. Furthermore, because the duration in which capacitor C2 is coupled to the resonant circuit is short, the resonant frequency remains, advantageously, substantially unaffected.

It should be understood that circuit 200 parameters such as, for example, the polarity and levels of voltages V1 and V2, respectively, the value of resistor R2, and the width of pulse Vʹ may be tailored to fit the particular requirements.

## Claims

1. A resonant degaussing circuit of a television display apparatus, comprising:
a degaussing coil (L_{DG});
a first switch (SCR1);
a first capacitance (C1) that is precharged prior to a degaussing interval, said first capacitance (C1) being coupled to said degaussing coil (L_{DG}) by said first switch (SCR1) to form with said degaussing coil a resonant circuit that generates a plurality of cycles of a degaussing current (i_{DG}) in said degaussing coil during said degaussing interval;
a second capacitance (C2) that is precharged prior to generation of said degaussing current (i_{DG}); characterized by
a second switch (Q4) coupling said second capacitance (C2) to said first capacitance (C1) when the value of said degaussing current (i_{DG}) passes through zero to couple charge from said second capacitance (C2) to said resonant circuit during said degaussing interval.

2. A circuit according to claim 1 characterized in that said second switch (Q4) is conductive at least once during each cycle of said plurality of cycles of said degaussing current.

3. A circuit according to claim 1 characterized in that said second switch (Q4) couples said second capacitance (C2) in parallel with said first capacitance (C1) to transfer charge from said second (C2) to said first capacitance (C1) when said second switch (Q4) is conductive.

4. A circuit according to claim 1 characterized in that said second capacitance (C2) is coupled to said resonant circuit during said predetermined portion that is substantially shorter than that of said degaussing cycle such that the resonant frequency of said resonant circuit is substantially unaffected by said second capacitance (C2).

5. A circuit according to claim 1 characterized in that said second capacitance (C2) reduces a rate by which an amplitude of degaussing current diminishes.

6. A circuit according to claim 1 characterized by means (TF) responsive to said degaussing current (i_{DG}) for generating a control signal (V') that is coupled to a control terminal (base) of said second switch (Q4) during said predetermined portion of said cycle that causes said second switch (Q4) to be conductive during said portion.

7. A circuit according to claim 6 characterized in that said control signal generating means comprises a current sensing transformer (TF) coupled in a current path of said degaussing current (i_{DG}) that generates a pulse when said degaussing current changes polarity, said pulse having a duration that is substantially shorter than that of said cycle of said degaussing current.

8. A resonant degaussing circuit of a television display apparatus, comprising:
a degaussing coil (L_{DG});
a switch (SCR1);
a capacitance (C1) that is precharged prior to a degaussing interval, said capacitance (C1) being coupled to said degaussing coil (L_{DG}) by said switch (SCR1) to form with said degaussing coil a resonant circuit that generates, in accordance with the charge that is stored in said capacitance (C1), a plurality of cycles of a degaussing current in said degaussing coil (L_{DG}) during said degaussing interval; characterized by
means (TF,C2,Q4) responsive to said degaussing current for generating a pulse of current that is coupled to said capacitance (C1) when the value of said degaussing current passes through zero, to augment said charge that is stored in said capacitance (C1).

9. A resonant degaussing circuit according to claim 8 characterized in that said pulse of current generating means comprises a current transformer (TF) that is coupled in a path of said degaussing current that generates a pulse during said portion, a second switch (Q4) that is responsive to said pulse and a second capacitance (C2) that is coupled to said capacitor by said second switch (Q4) when said pulse occurs.

10. A circuit according to claim 9 characterized in that said current transformer (TF) has a primary winding that conducts at least a substantial portion of said degaussing current.

## Patentansprüche

1. Resonanz-Entmagnetisierungsschaltung für ein Fernseh-Anzeigegerät, umfassend:
eine Entmagnetisierungsspule (L_{DG});
einen ersten Schalter (SCR1);
eine erste Kapazität (C1), die vor einem Entmagnetisierungsintervall vorgeladen wird, wobei die erste Kapazität (C1) durch den ersten Schalter (SCR1) mit der Entmagnetisierungsspule (L_{DG}) verbunden ist, um mit der Entmagnetisierungsspule eine Resonanzschaltung zu bilden, die während des Entmagnetisierungsintervalls in der Entmagnetisierungsspule eine Vielzahl von Perioden eines Entmagnetisierungstroms (i_{DG}) erzeugt;
eine zweite Kapazität (C2), die vor der Erzeugung des Entmagnetisierungsstroms (i_{DG}) vorgeladen wird;
gekennzeichnet durch:
einen zweiten Schalter (Q4), der die zweite Kapazität (C2) mit der ersten Kapazität (C1) verbindet, wenn der Wert des Entmagnetisierungsstroms (i_{DG}) durch Null geht, um während des Entmagnetisierungsintervalls Ladung von der zweiten Kapazität (C2) der Resonanzschaltung zuzuführen.

2. Schaltung nach Anspruch 1, dadurch gekennzeichnet, daß der zweite Schalter (Q4) wenigstens einmal während jeder Periode der Vielzahl von Perioden des Entmagnetisierungsstroms leitend ist.

3. Schaltung nach Anspruch 1, dadurch gekennzeichnet, daß der zweite Schalter (Q4) die zweite Kapazität (C2) parallel zu der ersten Kapazität (C1) schaltet, um Ladung von der zweiten (C2) zur ersten Kapazität (C1) zu übertragen, wenn der zweite Schalter (Q4) leitend ist.

4. Schaltung nach Anspruch 1, dadurch gekennzeichnet, daß die zweite Kapazität (C2) mit der Resonanzschaltung während des vorgegebenen Teils verbunden ist, der nennenswert kürzer ist als der der Entmagnetisierungsperiode, so daß die Resonanzfrequenz der Resonanzschaltung von der zweiten Kapazität (C2) im wesentlichen unbeeinflußt bleibt.

5. Schaltung nach Anspruch 1, dadurch gekennzeichnet, daß die zweite Kapazität (C2) eine Rate vermindert, mit der eine Amplitude des Entmagnetisierungsstroms abnimmt.

6. Schaltung nach Anspruch 1, gekennzeichnet durch Mittel (TF), die auf den Entmagnetisierungsstrom (i_{DG}) ansprechen, um ein Steuersignal (V') zu erzeugen, das einem Steueranschluß (Basis) des zweiten Schalters (Q4) während des vorgegebenen Teils der Periode zugeführt wird, der berwirkt, daß der zweite Schalter (Q4) während dieses Teils leitend ist.

7. Schaltung nach Anspruch 6, dadurch gekennzeichnet, daß die das Steuersignal erzeugenden Mittel einen Strommeßwandler (TF) enthalten, der im Stromweg des Entmagnetisierungsstroms (i_{DG}) liegt, der einen Impuls erzeugt, wenn der Entmagnetisierungsstrom seine Polarität ändert, und daß der Impuls eine Dauer hat, die nennenswert kürzer als die der Periode des Entmagnetisierungsstroms ist.

8. Resonanz-Entmagnetisierungsschaltung für ein Fernseh-Anzeigegerät, umfassend:
eine Entmagnetisierungsspule (L_{DG});
einen Schalter (SCR1);
eine Kapazität (C1), die vor einem Entmagnetisierungsintervall vorgeladen wird, wobei die Kapazität (C1) durch den Schalter (SCR1) mit der Entmagnetisierungsspule (L_{DG}) verbunden ist, um mit der Entmagnetisierungsspule eine Resonanzschaltung zu bilden, die gemäß der Ladung, die in der Kapazität (C1) gespeichert ist, während des Entmagnetisierungsintervalls in der Entmagnetisierungsspule (L_{DG}) eine Vielzahl von Perioden eines Entmagnetisierungsstroms erzeugt;
gekennzeichnet durch:
Mittel (TF, C2, Q4), die auf den Entmagnetisierungsstrom ansprechen, um einen Stromimpuls zu erzeugen, der der Kapazität (C1) zugeführt wird, wenn der Wert des Entmagnetisierungsstroms durch Null geht, um die Ladung, die in der Kapazität (C1) gespeichert ist, zu vermehren.

9. Resonanz-Entmagnetisierungsschaltung nach Anspruch 8, dadurch gekennzeichnet, daß die den Stromimpuls erzeugenden Mittel einen Stromwandler (TF), der in einem Weg des Entmagnetisierungsstroms liegt, der einen Impuls während des genannten Teils erzeugt, einen zweiten Schalter (Q4), der auf den Impuls anspricht, und eine zweite Kapazität (C2) enthalten, die mit der genannten Kapazität durch den zweiten Schalter (Q4) verbunden wird, wenn der Impuls auftritt.

10. Schaltung nach Anspruch 9, dadurch gekennzeichnet, daß der Stromwandler (TF) eine Primärwicklung hat, die wenigstens einen nennenswerten Teil des Entmagnetisierungsstroms führt.

## Revendications

1. Circuit de démagnétisation résonnant pour un récepteur de rélévision comprenant :
- une bobine de démagnétisation (L_{DG}) ;
- un premier commutateur (SCR1) ;
- une première capacité (C1) qui est préchargée avant un intervalle de démagnétisation, ladite première capacité (C1) étant couplée à ladite bobine de démagnétisation (L_{DG}) par ledit premier commutateur (SCR1) pour former avec ladite bobine de démagnétisation, un circuit résonnant qui génère une pluralité de cycles d'un courant de démagnétisation (i_{DG}) dans ladite bobine de démagnétisation pendant l'intervalle de démagnétisation ;
- une seconde capacité (C2) qui et préchargée avant la génération dudit courant de démagnétisation (i_{DG}), caractérisé par
- un second commutateur (Q4) couplant ladite seconde capacité (C2) à ladite première capacité (C1) lorsque la valeur dudit courant de démagnétisation (i_{DG}) passe par zéro pour coupler la charge de ladite seconde capacité (C2) audit circuit résonnant durant ledit intervalle de démagnétisation.

2. Circuit selon la revendication 1, caractérisé en ce que ledit second commutateur (Q4) est conducteur au moins une fois pendant chaque cycle de ladite pluralité de cycles dudit courant de démagnétisation.

3. Circuit selon la revendication 1, caractérisé en ce que ledit second commutateur (Q4) couple ladite seconde capacité (C2) en parallèle avec ladite première capacité (C1) afin de transférer la charge de ladite seconde (C2) à ladite première capacité (C1) lorsque ledit second commutateur (Q4) est conducteur.

4. Circuit selon la revendication 1, caractérisé en ce que ladite seconde capacité (C2) est couplée audit circuit résonnant pendant ladite portion prédéterminée qui est sensiblement plus courte que celle dudit cycle de démagnétisation afin que la fréquence de résonance dudit circuit résonnant soit sensiblement inaffectée par ladite seconde capacité (C2).

5. Circuit selon la revendication 1, caractérisé en ce que ladite seconde capacité (C2) assure un taux de réduction par lequel est diminué une amplitude du courant de démagnétisation.

6. Circuit selon la revendication 1, caractérisé par des moyens (TF) sensibles audit courant de démagnétisation (i_{DG}) pour générer un signal de commande (V') qui est couplé à une borne de commande (base) dudit second commutateur (Q4) pendant ladite portion prédéterminée dudit cycle qui amène ledit second commutateur (Q4) à être conducteur pendant ladite portion.

7. Circuit selon la revendication 6, caractérisé en ce que lesdits moyens générant un signal de commande comprennent un transformateur de détection de courant (TF) couplé dans une trajectoire de courant dudit courant de démagnétisation (i_{DG}) qui génère une impulsion lorsque ledit courant de démagnétisation change de polarité, ladite impulsion présentant une durée qui est sensiblement plus courte que celle du cycle dudit courant de démagnétisation.

8. Circuit de démagnétisation résonnant pour un récepteur de télévision comprenant :
- une bobine de démagnétisation (L_{DG}) ;
- un commutateur (SCR1) ;
- une capacité (C1) qui est préchargée avant un intervalle de démagnétisation, ladite capacité (C1) étant couplée à ladite bobine de démagnétisation (L_{DG}) par ledit commutateur (SCR1) pour former avec ladite bobine de démagnétisation un circuit résonnant qui génère, en fonction de la charge qui est stockée dans ladite capacité (C1), une pluralité de cycles d'un courant de démagnétisation dans ladite bobine de démagnétisation (L_{DG}) pendant ledit intervalle de démagnétisation ; caractérisé par
- des moyens (TF, C2, Q4) sensibles audit courant de démagnétisation pour générer une impulsion de courant qui est couplée à ladite capacité (C1) lorsque la valeur dudit courant de démagnétisation passe par zéro, pour augmenter ladite charge qui est stockée dans ladite capacité (C1).

9. Circuit de démagnétisation résonnant selon la revendication 8, caractérisé en ce que lesdits moyens générant une impulsion de courant comprennent un transformateur de courant (TF) qui est couplé dans une trajectoire dudit courant de démagnétisation qui génére une impulsion pendant ladite portion, un second commutateur (Q4) qui est sensible à ladite impulsion et une seconde capacité (C2) qui est couplée audit condensateur par ledit second commutateur (Q4) lorsque se produit ladite impulsion.

10. Circuit selon la revendication 9, caractérisé en ce que ledit transformateur de courant (TF) possède un enroulement primaire qui conduit au moins une portion substantielle dudit courant de démagnétisation.
